# EUROPEAN PATENT APPLICATION

(11) **EP 3 179 044 A1**
(43) Date of publication of application: **14.06.2017**
(21) Application number: 16200650.6
(22) Date of filing: 25.11.2016
(51) Int. Cl.: F01D 7/00, B64C 11/42, F02K 3/06, F04D 29/36

(54) **METHOD AND SYSTEM FOR A PITCH CHANGE MECHANISM HYDRAULIC FLUID TRANSFER SLEEVE**

(30) Priority: 09.12.2015 US 201514963924
(71) Applicant: General Electric Company, Schenectady, NY 12345 (US)
(72) Inventor: NIERGARTH, Daniel Alan, Cincinnati, OH Ohio 45215 (US); MILLER, Brandon Wayne, Cincinnati, OH Ohio 45215 (US); ZATORSKI, Darek Tomasz, Cincinnati, OH Ohio 45215 (US); KROGER, Christopher James, Cincinnati, OH Ohio 45215 (US)
(74) Representative: Williams, Andrew Richard

(57) **Abstract**

A fluid flow transfer system 200 for transferring a fluid flow from a stationary member 202 to an adjacent rotatable member 204 is provided. The system 200 includes one or more fluid supply conduits 214 and a gearbox flow path 222 configured to channel the flow of fluid through the power gearbox 216. The system 200 also includes a transfer sleeve device 224 configured to receive the flow of fluid from the gearbox flow path 222. The transfer sleeve device 224 includes a stationary transfer sleeve member 202 and a rotatable transfer sleeve member 204. The transfer sleeve device 222 is configured to transfer the flow of fluid between the stationary transfer sleeve member 202 and the rotatable transfer sleeve member 204. A pitch change mechanism (PCM) actuator 230 is configured to receive the flow of fluid through one or more of a plurality of flow ports 228 wherein the plurality of flow ports 228 direct the flow of fluid to a respective actuator 230.

## Description

### BACKGROUND

The field of the disclosure relates generally to gas turbine engines and, more particularly, to a method and system for channeling a flow of fluid from a stationary member of a gas turbine engine to an adjacent rotatable member of the gas turbine engine.

At least some known gas turbine engines include a rotatable member that may include controllable features actuated by, for example, hydraulic oil pressure acting on an operable component of an actuator. The supply of hydraulic oil pressure is typically located on a stationary portion of the gas turbine engine. Accordingly, to provide a controlled flow of hydraulic oil pressure from the stationary source to a rotatable load, a transfer of the flow of hydraulic oil pressure from the stationary portion of the gas turbine engine to the rotatable member is needed.

### BRIEF DESCRIPTION

In one aspect, a fluid transfer system configured to transfer a flow of fluid from a stationary member to an adjacent rotatable member includes a source of a flow of fluid, one or more fluid supply conduits configured to channel the flow of fluid to a power gearbox, and a gearbox flow path configured to channel the flow of fluid through the power gearbox. The fluid transfer system also includes a transfer sleeve device configured to receive the flow of fluid from the gearbox flow path, the transfer sleeve device including a stationary transfer sleeve member and a rotatable transfer sleeve member, the transfer sleeve device configured to transfer the flow of fluid between the stationary transfer sleeve member and the rotatable transfer sleeve member, and a pitch change mechanism (PCM) actuator receive the flow of fluid through one or more of a plurality of flow ports wherein the plurality of flow ports direct the flow of fluid to a respective actuator.

In another aspect, a method of transferring fluid from a stationary member to an adjacent rotatable member includes receiving a flow of fluid through a plurality of fluid supply conduits, channeling the flows of fluid to a power gearbox portion of a fluid transfer device, and channeling the flows of fluid through gearbox flow paths to respective plenums of the fluid transfer device. The method further includes transferring the flows of fluid between a stationary transfer member and a rotatable transfer member of the fluid transfer device, and channeling the flows of fluid through one or more flow ports to a respective actuator of a rotatable mechanism.

In yet another aspect, a gas turbine engine assembly includes a fan assembly including an axis of rotation, a hydraulic actuator configured to angularly displace one or more blades of the fan assembly, the hydraulic actuator rotatable about the axis of rotation with the fan assembly, and a gear assembly configured to drive the fan assembly through a first shaft from a coupling to a power drive shaft. The gear assembly includes a sleeve assembly at least partially surrounding the power drive shaft and coupled to a housing of the gear assembly, the sleeve assembly configured to receive a plurality of externally modulated flows of oil through the power drive shaft and to distribute the flows of oil through respective ports of a plurality of radially outwardly directed ports. The ports are angled with respect to a radial of the sleeve assembly in a direction of rotation of the power drive shaft, each of the plurality of flows of oil channeled to a respective hydraulic actuator or combination of hydraulic actuators.

### DRAWINGS

These and other features, aspects, and advantages of the present disclosure will become better understood when the following detailed description is read with reference to the accompanying drawings in which like characters represent like parts throughout the drawings, wherein:
FIG. 1 is a schematic illustration of an exemplary gas turbine engine in accordance with an example embodiment of the present disclosure.
FIG. 2 is a side view of a portion of a fluid transfer system that is configured to transfer a flow of fluid from a stationary member to an adjacent rotatable member.
FIG. 3 is a side view partially cutaway of a stationary transfer sleeve member of the transfer sleeve device shown in FIG. 2 in accordance with an exemplary embodiment of the present invention.
FIG. 4 is a perspective view of the stationary transfer sleeve member of the transfer sleeve device shown in FIG. 2 in accordance with an exemplary embodiment of the present invention.
FIG. 5 is a side view of a fluid transfer device in accordance with another embodiment of the present disclosure.

Unless otherwise indicated, the drawings provided herein are meant to illustrate features of embodiments of this disclosure. These features are believed to be applicable in a wide variety of systems including one or more embodiments of this disclosure. As such, the drawings are not meant to include all conventional features known by those of ordinary skill in the art to be required for the practice of the embodiments disclosed herein.

### DETAILED DESCRIPTION

In the following specification and the claims, reference will be made to a number of terms, which shall be defined to have the following meanings.

The singular forms "a," "an," and "the" include plural references unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about," "approximately," and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise.

Embodiments of the pitch change mechanism (PCM) hydraulic fluid transfer sleeve described herein provide a cost-effective method for rotating the blades of a fan assembly around a longitudinal axis of the fan blades. To use a hydraulic actuator in a variable pitch fan assembly without duplex bearings, the pitch change actuator must rotate with the fan assembly. However, hydraulic fluid is needed to be transferred to the actuator for operation of the PCM. The hydraulic fluid transfer sleeve permits multiple hydraulic lines to be transferred from a stationary to a rotatable body. The method described herein permits the rotation of the blades around their longitudinal axis without the use of a stationary to rotatable duplex bearing. A rotatable duplex bearing is significantly heavier and more complicated than the apparatus and method described herein. The PCM hydraulic fluid transfer sleeve also facilitates packaging the PCM in the gas turbine engine and improving a maintenance capability of the gas turbine engine.

The hydraulic fluid transfer sleeve is operable with a hydraulic pitch change actuator in a variable pitch fan. The hydraulic fluid transfer sleeve is stationary and contains one or more channels dependent on the number of actuation lines needed in the pitch change actuator. A receiver, which is coupled to the pitch change actuator, slides into the hydraulic fluid transfer sleeve and rotates along with the fan shaft. There are one or more receiving channels into which the fluid from the specific hydraulic line from the hydraulic fluid transfer sleeve is transferred. A plurality of plenums on the hydraulic fluid transfer sleeve receives a supply of hydraulic fluid and transfers the hydraulic fluid across a gap between the hydraulic fluid transfer sleeve and the receiver. The rotatable receiver/actuator includes a plurality of receiver openings that receives the transferred hydraulic fluid. The receiver openings are coupled in flow communication with operating lines for the pitch change actuator. The pressure to the hydraulic fluid transfer sleeve may be varied to control an operation of the pitch change actuator. One or more of the receiver openings may be used to direct hydraulic fluid back to the hydraulic fluid transfer sleeve.

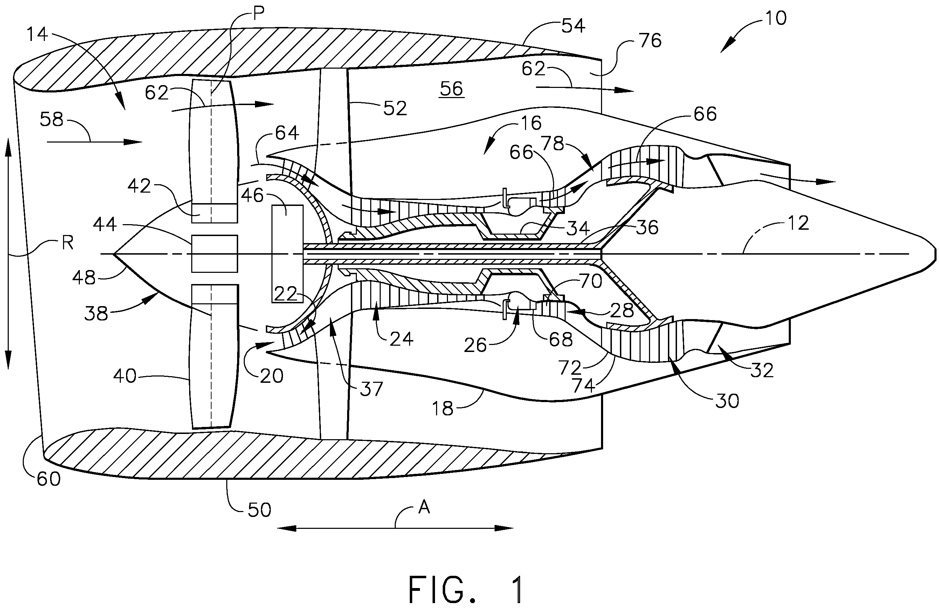

FIG. 1 is a schematic cross-sectional view of a gas turbine engine assembly 10 in accordance with an exemplary embodiment of the present disclosure. In the example embodiment, gas turbine engine assembly 10 is embodied in a high-bypass turbofan jet engine. As shown in FIG. 1, gas turbine engine assembly 10 defines an axial direction A (extending parallel to a longitudinal axis 12 provided for reference) and a radial direction R. In general, gas turbine engine assembly 10 includes a fan section 14 and a core turbine engine 16 disposed downstream from the fan section 14.

In the example embodiment, core turbine engine 16 includes an approximately tubular outer casing 18 that defines an annular inlet 20. Outer casing 18 encases, in serial flow relationship, a compressor section including a booster or low pressure (LP) compressor 22 and a high pressure (HP) compressor 24; a combustion section 26; a turbine section including a high pressure (HP) turbine 28 and a low pressure (LP) turbine 30; and a jet exhaust nozzle section 32. A high pressure (HP) shaft or spool 34 drivingly connects the HP turbine 28 to the HP compressor 24. A low pressure (LP) shaft or spool 36 drivingly connects the LP turbine 30 to the LP compressor 22. The compressor section, combustion section 26, turbine section, and nozzle section 32 together define a core air flowpath 37.

In the example embodiment, fan section 14 includes a variable pitch fan 38 having a plurality of fan blades 40 coupled to a disk 42 in a spaced apart relationship. Fan blades 40 extend radially outwardly from disk 42. Each fan blade 40 is rotatable relative to the disk 42 about a pitch axis P by virtue of the fan blades 40 being operatively coupled to a suitable pitch change mechanism (PCM) 44 configured to vary the pitch of the fan blades 40. In other embodiments, pitch change mechanism (PCM) 44 configured to collectively vary the pitch of the fan blades 40 in unison. Fan blades 40, disk 42, and pitch change mechanism 44 are together rotatable about longitudinal axis 12 by LP shaft 36 across a power gear box 46. Power gear box 46 includes a plurality of gears for adjusting the rotational speed of the fan 38 relative to the LP shaft 36 to a more efficient rotational fan speed.

Disk 42 is covered by rotatable front hub 48 aerodynamically contoured to promote an airflow through the plurality of fan blades 40. Additionally, fan section 14 includes an annular fan casing or outer nacelle 50 that circumferentially surrounds fan 38 and/or at least a portion of the core turbine engine 16. In the example embodiment, nacelle 50 is configured to be supported relative to the core turbine engine 16 by a plurality of circumferentially-spaced outlet guide vanes 52. Moreover, a downstream section 54 of nacelle 50 may extend over an outer portion of the core turbine engine 16 so as to define a bypass airflow passage 56 therebetween.

During operation of gas turbine engine assembly 10, a volume of air 58 enters through an associated inlet 60 of the nacelle 50 and/or fan section 14. As volume of air 58 passes across fan blades 40, a first portion 62 of volume of air 58 is directed or routed into bypass airflow passage 56 and a second portion 64 of volume of air 58 is directed or routed into the core air flowpath 37, or more specifically into the LP compressor 22. A ratio between first portion 62 and second portion 64 is commonly referred to as a bypass ratio. The pressure of second portion 64 is then increased as it is routed through the high pressure (HP) compressor 24 and into the combustion section 26, where it is mixed with fuel and burned to provide combustion gases 66.

Combustion gases 66 are routed through HP turbine 28 where a portion of thermal and/or kinetic energy from combustion gases 66 is extracted via sequential stages of HP turbine stator vanes 68 that are coupled to outer casing 18 and HP turbine rotor blades 70 that are coupled to HP shaft or spool 34, thus causing HP shaft or spool 34 to rotate, which then drives a rotation of HP compressor 24. Combustion gases 66 are then routed through LP turbine 30 where a second portion of thermal and kinetic energy is extracted from the combustion gases 66 via sequential stages of LP turbine stator vanes 72 that are coupled to the outer casing 18 and LP turbine rotor blades 74 that are coupled to the LP shaft or spool 36, which drives a rotation of LP shaft or spool 36 and LP compressor 22 and/or rotation of fan 38.

Combustion gases 66 are subsequently routed through jet exhaust nozzle section 32 of core turbine engine 16 to provide propulsive thrust. Simultaneously, the pressure of the first portion 62 is substantially increased as first portion 62 is routed through bypass airflow passage 56 before it is exhausted from a fan nozzle exhaust section 76 of gas turbine engine assembly 10, also providing propulsive thrust. HP turbine 28, LP turbine 30, and jet exhaust nozzle section 32 at least partially define a hot gas path 78 for routing the combustion gases 66 through core turbine engine 16.

Gas turbine engine assembly 10 is depicted in FIG. 1 by way of example only, and that in other exemplary embodiments, gas turbine engine assembly 10 may have any other suitable configuration including for example, a turboprop engine.

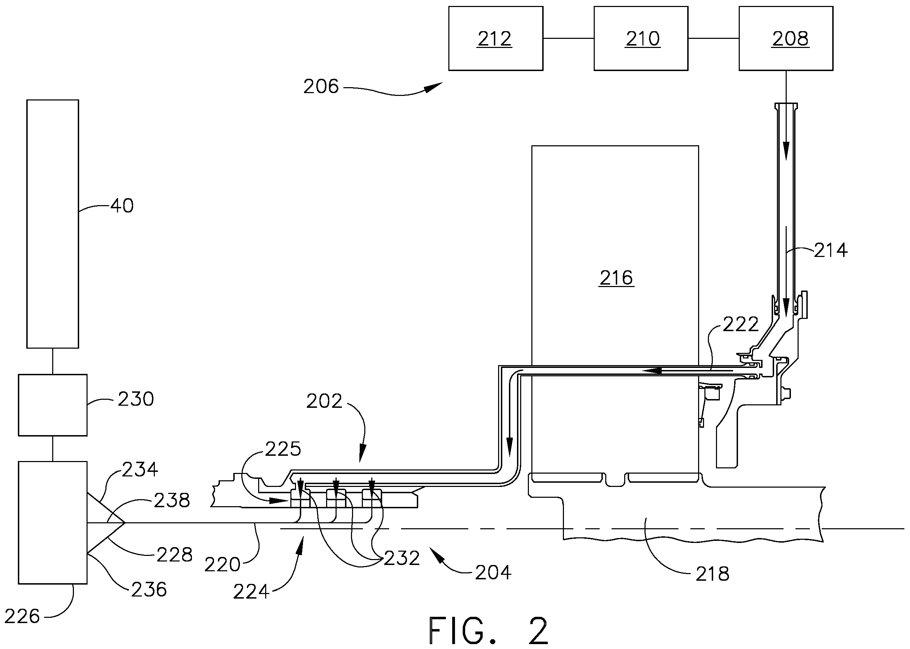

FIG. 2 is a side view of a portion of a fluid transfer system 200 that is configured to transfer a flow of fluid from a stationary member 202 to an adjacent rotatable member 204. In the exemplary embodiment, fluid transfer system 200 includes a source 206 of a flow of fluid that may include a fluid reservoir 208 and a controllable pump 210 and a controllable valve 212. Fluid transfer system 200 also includes one or more fluid supply conduits 214 configured to channel the flow of fluid to a power gearbox 216. Power gearbox 216 is configured to transform rotational energy from a first power shaft 218 rotating at a first speed into rotational energy in a second load shaft 220 rotating at a second speed. In some embodiments, power gearbox 216 is also configured to channel the flow of fluid through power gearbox 216 through a gearbox flow path 222. For example, when power gearbox 216 is of a star configuration a planetary gear carrier is held stationary, permitting channeling the flow of fluid through planetary gear carrier of power gearbox 216. However, in embodiments where power gearbox 216 is of a planetary configuration, planetary gear carrier is also rotatable making routing of the flow of fluid through power gearbox 216 difficult. In such a case, the flow of fluid may be routed around power gearbox 216. Fluid transfer system 200 further includes a transfer sleeve device 224 configured to receive the flow of fluid from gearbox flow path 222. Transfer sleeve device 224 includes stationary member 202, also referred to as a stationary transfer sleeve member and rotatable member 204, also referred to as a rotatable transfer sleeve member. Transfer sleeve device 224 is configured to transfer the flows of fluid between stationary transfer sleeve member 202 and rotatable transfer sleeve member 204 across a gap 225 between stationary transfer sleeve member 202 and rotatable transfer sleeve member 204. Fluid transfer system 200 also includes or is coupled in flow communication with a pitch change mechanism (PCM) 226 configured to receive the flows of fluid through one or more of a plurality of flow ports 228 wherein the plurality of flow ports direct the flow of fluid to a respective PCM actuator 230. In various embodiments, transfer sleeve device 224 is formed integrally with power gearbox 216. In other embodiments, transfer sleeve device 224 is formed on a forward end of power gearbox 216 or on an aft end of power gearbox 216. Transfer sleeve device 224 is configured to transfer a plurality of different flows of fluid through separate transfer plenums 232. In one embodiment, transfer sleeve device 224 is configured to transfer a first flow of fluid to a pitch increase portion 234 of PCM 226, a second flow of fluid to a pitch decrease portion 236 of PCM 226, and a third flow of fluid to a drain portion 238 of PCM 226. In various embodiments, when PCM 226 is commended to a reverse position, drain portion 238 will be pressurized and act to further rotate the actuator into the reverse position. Drain portion 238 does not always act to drain fluid from PCM 226.

Although illustrated as transferring the flows of fluid between stationary transfer sleeve member 202 and rotatable transfer sleeve member 204 in a radial direction, in other embodiments, transfer sleeve device 224 is configured to transfer the flows of fluid between stationary transfer sleeve member 202 and rotating transfer sleeve member 204 in an axial direction using flanges in a face-to-face abutment. Moreover, in other embodiments, transfer sleeve member 202 may comprise the rotatable member of transfer sleeve device 224 and transfer sleeve member 204 may comprise the stationary member of transfer sleeve device 224.

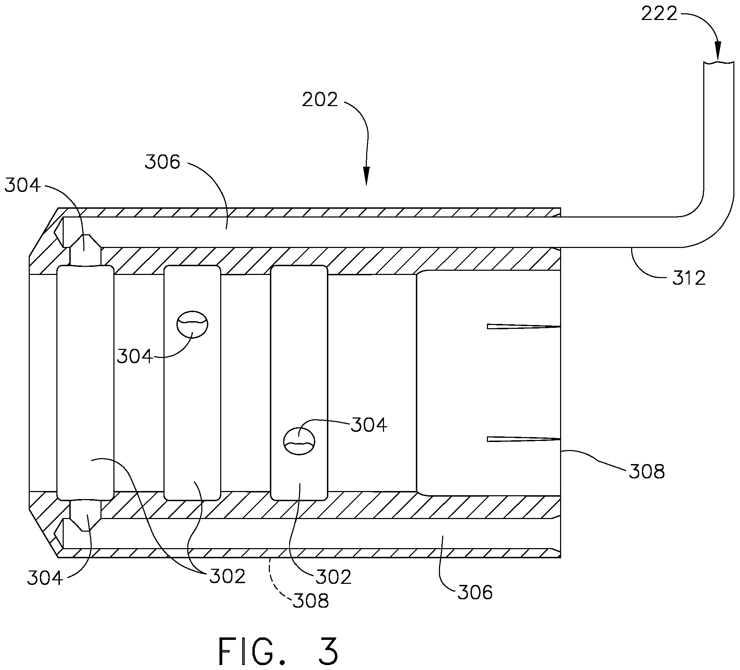

FIG. 3 is a side view partially cutaway of stationary transfer sleeve member 202 of transfer sleeve device 224 in accordance with an exemplary embodiment of the present invention. In the exemplary embodiment, stationary transfer sleeve member 202 includes a substantially cylindrical body configured to circumscribe rotatable transfer sleeve member 204 when transfer sleeve device 224 is fully assembled. In the illustrated embodiment, stationary transfer sleeve member 202 includes three annular plenums 302 that extend circumferentially about an inner surface of stationary transfer sleeve member 202. Although described as three plenums, any number of plenums can be used. Each plenum 302 is configured to direct a flow of fluid across gap 225 (shown in FIG. 2) between stationary transfer sleeve member 202 and rotatable transfer sleeve member 204 to transfer the flows of fluid into rotatable transfer sleeve member 204. Each plenum 302 includes one or more respective ports 304 extending from a feed tube 306 formed on an outer surface 308 of stationary transfer sleeve member 202. In the exemplary embodiment, stationary transfer sleeve member 202 includes two ports 304 per plenum 302 spaced approximately 180° apart. In other embodiments, ports 304 may be of a different number and may be spaced other than 180° apart with respect to each other. Accordingly, because each feed tube 306 supplies one port 304, in this exemplary embodiment, stationary transfer sleeve member 202 includes six feed tubes 306 spaced circumferentially about outer surface 308. An inlet opening 310 is coupled in flow communication with a conduit 312 from gearbox flow path 222 (shown in FIG. 2).

During operation, a fluid such as hydraulic oil is supplied to PCM 226 (shown in FIG. 2) through conduit 312 from gearbox flow path 222 (shown in FIG. 2), which channels the flow of fluid into a respective feed tube 306 or pair of feed tubes 306. The flow of fluid is directed through port 304 coupled in flow communication with the respective feed tube 306 or pair of feed tubes 306. The flows of fluid exiting ports 304 are received in rotatable transfer sleeve member 204 and channeled to PCM 226 (shown in FIG. 2).

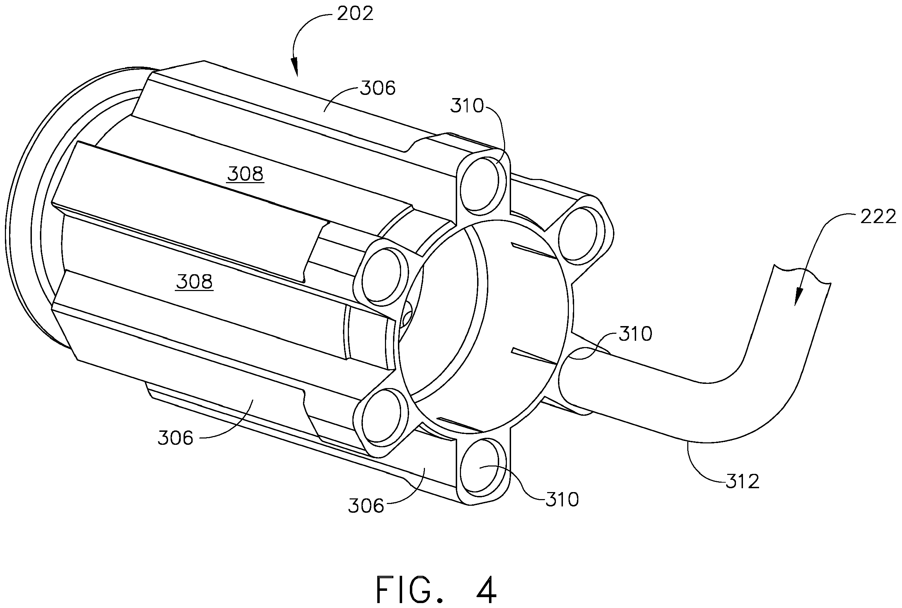

FIG. 4 is a perspective view of stationary transfer sleeve member 202 of transfer sleeve device 224 (shown in FIG. 2) in accordance with an exemplary embodiment of the present invention. In the example embodiment, stationary transfer sleeve member 202 includes a plurality of feed tubes 306 formed in radially outer surface 308 of stationary transfer sleeve member 202. Feed tubes 306 extend axially along outer surface 308 substantially parallel to central axis 128 (shown in FIG. 1).

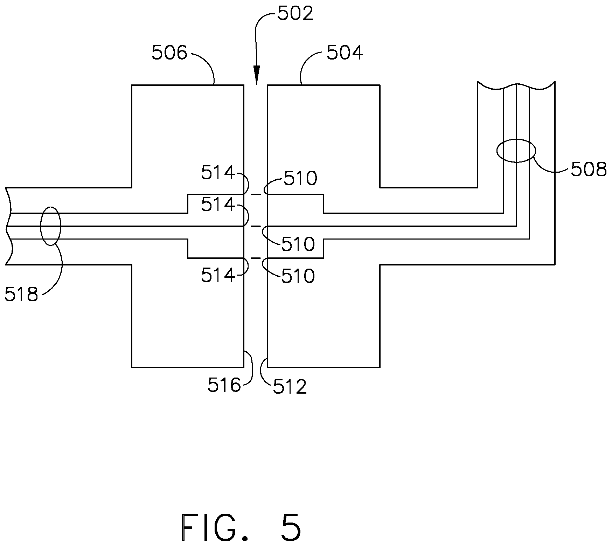

FIG. 5 is a side view of a fluid transfer device 500 in accordance with another embodiment of the present disclosure. In the example embodiment, a flow of fluid is transferred across a gap 502 between a stationary flange transfer member 504 and a rotatable flange transfer member 506 in an axial direction. A plurality of fluid feed lines 508 channel fluid from a fluid source (not shown) to transfer ports 510 formed in a face 512 of stationary flange transfer member 504. A plurality of complementary receiver ports 514 are formed in a face 516 of rotatable flange transfer member 506. Receiver ports 514 are coupled in flow communication with respective PCM actuator supply conduits 518 configured to channel the flows of fluid to PCM 226 (shown in FIG. 2).

The above-described fluid supply systems provide an efficient method for supplying fluid from a stationary gas turbine engine component to a rotatable gas turbine engine component across a gap between the gas turbine engine components. Specifically, the above-described fluid supply systems includes fluid supply conduits that selectively supplies a PCM actuator with control fluid for increasing a pitch of blades of a fan assembly, decreasing the pitch of the blades of the fan assembly, and draining fluid from the PCM actuator.

Exemplary embodiments of fluid supply systems are described above in detail. The fluid supply systems, and methods of operating such systems and component devices are not limited to the specific embodiments described herein, but rather, components of the systems and/or steps of the methods may be utilized independently and separately from other components and/or steps described herein. For example, the methods may also be used in combination with other systems requiring a transfer of fluid flow from a static component to a rotatable component, and are not limited to practice with only the systems and methods as described herein. Rather, the exemplary embodiment can be implemented and utilized in connection with many other machinery applications that are currently configured to receive and accept fluid supply systems.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

Various aspects and embodiments of the present invention are defined by the following numbered clauses:
1. A fluid transfer system configured to transfer a flow of fluid from a stationary member to an adjacent rotatable member, said system comprising:
   a source of a flow of fluid;
   one or more fluid supply conduits configured to channel the flow of fluid to a transfer sleeve device configured to receive the flow of fluid from the source of a flow of fluid, said transfer sleeve device comprising a stationary transfer sleeve member and a rotatable transfer sleeve member, said transfer sleeve device configured to transfer the flow of fluid between said stationary transfer sleeve member and said rotatable transfer sleeve member; and
   a pitch change mechanism (PCM) actuator configured to receive the flow of fluid through one or more of a plurality of flow ports, wherein the plurality of flow ports direct the flow of fluid to a respective actuator.
2. The system of clause 1, further comprising a power gearbox comprising a gearbox flow path configured to channel the flow of fluid through the power gearbox.
3. The system of any preceding clause, wherein said transfer sleeve device is formed integrally with a power gearbox.
4. The system of any preceding clause, wherein said transfer sleeve device is formed on a forward end of a power gearbox.
5. The system of any preceding clause, wherein said transfer sleeve device is formed on an aft end of a power gearbox.
6. The system of any preceding clause, wherein said transfer sleeve device is configured to transfer a plurality of different flows of fluid through separate transfer plenums.
7. The system of any preceding clause, wherein said transfer sleeve device is configured to transfer a first flow of fluid to a pitch increase portion of said PCM actuator, a second flow of fluid to a pitch decrease portion of said PCM actuator, and a third flow of fluid to a drain portion of said PCM actuator.
8. The system of any preceding clause, wherein said transfer sleeve device is configured to transfer the flow of fluid between said stationary transfer sleeve member and said rotatable transfer sleeve member in at least one of a radial direction and an axial direction.
9. The system of any preceding clause, wherein said transfer sleeve device is configured to transfer the flow of fluid in the axial direction between a stationary transfer flange member and a rotatable transfer flange member in an adjacent face-to-face orientation.
10. A method of transferring fluid from a stationary member to an adjacent rotatable member, said method comprising:
   receiving a flow of fluid through a plurality of fluid supply conduits;
   channeling the flows of fluid to a power gearbox portion of a fluid transfer device;
   channeling the flows of fluid through gearbox flow paths to respective plenums of the fluid transfer device;
   transferring the flows of fluid between a stationary transfer member and a rotatable transfer member of the fluid transfer device; and
   channeling the flows of fluid through one or more flow ports to a respective actuator of a rotatable mechanism.
11. The method of any preceding clause, wherein channeling the flows of fluid through gearbox flow paths to respective plenums of the fluid transfer device comprises channeling the flows of fluid through gearbox flow paths to respective axially-spaced plenums of the fluid transfer device.
12. The method of any preceding clause, wherein transferring the flows of fluid between a stationary transfer member and a rotatable transfer member of the fluid transfer device comprises transferring the flows of fluid across a gap between the stationary transfer member and the rotatable transfer member of the fluid transfer device in at least one of an axial direction and a radial direction.
13. The method of any preceding clause, wherein transferring the flows of fluid between a stationary transfer member and a rotatable transfer member of the fluid transfer device comprises transferring the flows of fluid in the axial direction between a stationary transfer flange member and a rotatable transfer flange member in an adjacent face-to-face orientation.
14. The method of any preceding clause, wherein channeling the flows of fluid through gearbox flow paths to respective plenums of the fluid transfer device comprises channeling three flows of fluid through three corresponding gearbox flow paths to three respective plenums of the fluid transfer device.
15. The method of any preceding clause, wherein channeling the flows of fluid through one or more flow ports to a respective actuator of a rotatable mechanism comprises channeling the flows of fluid through a first flow port configured to rotate the respective actuator in a first direction, a second flow port configured to rotate the respective actuator in a second direction opposite the first direction, and a third flow port configured to drain a portion of the respective actuator.
16. A gas turbine engine assembly comprising:
   a fan assembly comprising an axis of rotation;
   a hydraulic actuator configured to angularly displace one or more blades of said fan assembly, said hydraulic actuator rotatable about the axis of rotation with said fan assembly;
   a gear assembly configured to drive said fan assembly through a first shaft from a coupling to a power drive shaft, said gear assembly comprising:
      a sleeve assembly at least partially surrounding said power drive shaft and coupled to a housing of the gear assembly, said sleeve assembly configured to receive a plurality of externally modulated flows of oil through said power drive shaft and to distribute the flows of oil through respective ports of a plurality of radially outwardly directed ports, said ports angled with respect to a radial line of said sleeve assembly in a direction of rotation of said power drive shaft, each of the plurality of flows of oil channeled to a respective hydraulic actuator or combination of hydraulic actuators.
17. The system of any preceding clause, wherein said transfer sleeve device is formed integrally with said power gearbox.
18. The system of any preceding clause, wherein said transfer sleeve device is formed on at least one of a forward end of said power gearbox and an aft end of said power gearbox.
19. The system of any preceding clause, wherein said transfer sleeve device is configured to transfer a first flow of fluid to a pitch increase portion of said PCM actuator, a second flow of fluid to a pitch decrease portion of said PCM actuator, and a third flow of fluid to a drain portion of said PCM actuator.
20. The system of any preceding clause, wherein said transfer sleeve device is configured to transfer the flow of fluid between said stationary transfer sleeve member and said rotatable transfer sleeve member in at least one of a radial direction and an axial direction.
21. The system of any preceding clause, wherein said transfer sleeve device is configured to transfer the flow of fluid in the axial direction between a stationary transfer flange member and a rotatable transfer flange member in an adjacent face-to-face orientation.

## Claims

1. A fluid transfer system (200) configured to transfer a flow of fluid from a stationary member (202) to an adjacent rotatable member (204), said system (200) comprising:
a source (206) of a flow of fluid;
one or more fluid supply conduits (214) configured to channel the flow of fluid to a transfer sleeve device (224) configured to receive the flow of fluid from the source (206) of a flow of fluid, said transfer sleeve device (224) comprising a stationary transfer sleeve member (202) and a rotatable transfer sleeve member (204), said transfer sleeve device (224) configured to transfer the flow of fluid between said stationary transfer sleeve member (202) and said rotatable transfer sleeve member (204); and
a pitch change mechanism (PCM) actuator (230) configured to receive the flow of fluid through one or more of a plurality of flow ports (228), wherein the plurality of flow ports (228) direct the flow of fluid to a respective actuator(230).

2. The system (200) of claim 1, further comprising a power gearbox (216) comprising a gearbox flow path (222) configured to channel the flow of fluid through the power gearbox (216).

3. The system (200) of claim 2, wherein said transfer sleeve device (224) is formed integrally with said power gearbox (216).

4. The system (200) of claim 2 or 3, wherein said transfer sleeve device (224) is formed on a forward end of said power gearbox (216).

5. The system (200) of claim 2 or 3, wherein said transfer sleeve device (224) is formed on an aft end of a power gearbox (216).

6. The system (200) of any preceding claim, wherein said transfer sleeve device (224) is configured to transfer a plurality of different flows of fluid through separate transfer plenums (232).

7. The system (200) of claim 6, wherein said transfer sleeve device (224) is configured to transfer a first flow of fluid to a pitch increase portion (234) of said PCM actuator (230), a second flow of fluid to a pitch decrease portion (236) of said PCM actuator (230), and a third flow of fluid to a drain portion (238) of said PCM actuator (230).

8. The system (200) of claim 6, wherein said transfer sleeve device (224) is configured to transfer the flow of fluid between said stationary transfer sleeve member (202) and said rotatable transfer sleeve member (204) in at least one of a radial direction and an axial direction.

9. The system (200) of claim 8, wherein said transfer sleeve device (224) is configured to transfer the flow of fluid in the axial direction between a stationary transfer flange member (504) and a rotatable transfer flange member (506) in an adjacent face-to-face orientation.

10. A gas turbine engine assembly (10) comprising:
a fan assembly (14) comprising an axis of rotation (12);
a hydraulic actuator (230) configured to angularly displace one or more blades (40) of said fan assembly (14), said hydraulic actuator (230) rotatable about the axis of rotation (12) with said fan assembly (14);
a gear assembly (216) configured to drive said fan assembly (14) from a power drive shaft (36), said gear assembly (216) comprising:
a sleeve assembly (224) at least partially surrounding said power drive shaft (36) and coupled to a housing of the gear assembly (216), said sleeve assembly (224) configured to receive a plurality of externally modulated flows of oil through said power drive shaft (36) and to distribute the flows of oil through respective ports (228) of a plurality of radially outwardly directed ports (228), said ports (228) angled with respect to a radial line of said sleeve assembly (224) in a direction of rotation of said power drive shaft (36), each of the plurality of flows of oil channeled to a respective hydraulic actuator (230) or combination of hydraulic actuators (230).
